# EUROPEAN PATENT SPECIFICATION

(11) **EP 1 499 977 B1**
(45) Date of publication and mention of the grant of the patent: **04.07.2007**
(21) Application number: 03719855.3
(22) Date of filing: 18.04.2003
(51) Int. Cl.: G06F 11/34

(54) **SYSTEM AND METHOD FOR MONITORING A COMPUTER APPLICATION**
SYSTEM UND VERFAHREN ZUR ÜBERWACHUNG EINES COMPUTERS
SYSTEME ET PROCEDE DE SURVEILLANCE D'UN ORDINATEUR

(30) Priority: 19.04.2002 US 373959 P
(43) Date of publication of application: 26.01.2005
(73) Proprietor: Computer Associates Think, Inc., Islandia, New York 11749 (US)
(72) Inventor: KHOT, Prakash, Burlington, MA 01803 (US); SHANKARANARAYANAN, Kartik, Framingham, MA 01701 (US); JODHAPURKAR, Rajendra, Framingham, MA 01702 (US); DEVINCENTIS, Silvio Computer Associates Think,Inc., Islandia, NY 11749 (US); DOSHI, Rutvik, Framingham, MA 01702 (US)
(74) Representative: Dunlop, Hugh Christopher
(86) International application number: PCT/US2003/012204
(87) International publication number: WO 2003/090085

(56) References cited:
- GB-A- 2 368 689
- US-A- 5 867 659
- US-B1- 6 339 750
- GAO J ET AL: "Monitoring software components and component-based software" COMPUTER SOFTWARE AND APPLICATIONS CONFERENCE, 2000. COMPSAC 2000. THE 24TH ANNUAL INTERNATIONAL TAIPEI, TAIWAN 25-27 OCT. 2000, LOS ALAMITOS, CA, USA,IEEE COMPUT. SOC, US, 25 October 2000 (2000-10-25), pages 403-412, XP010523808 ISBN: 0-7695-0792-1
- FUJITSU: "Softek EnView -- Simplify quality of service monitoring for 24/7 availability" INTERNET ARTICLE, [Online] November 2001 (2001-11), pages 1-4, XP002268410 Retrieved from the Internet: <URL:http://www.softek.fujitsu.com/en/prod ucts/enview/sm0018.pdf> [retrieved on 2004-01-27]

## Description

### BACKGROUND

### TECHNICAL FIELD

The present disclosure relates to computer applications. More specifically, the present disclosure relates to a method and system for real time transaction monitoring of a computer application.

### DESCRIPTION OF THE RELATED ART

The Java (TM) 2 Platform, Enterprise Edition (J2EE) is the standard for developing multi-tier enterprise applications. J2EE bases enterprise applications on standardized, modular components, provides a set of services to those components, and handles many details of application behavior automatically, without complex programming.

Servlet technology provides web developers with a simple, consistent mechanism for extending the functionality ofa web server and for accessing existing business systems. A servlet can almost be thought of as an applet that runs on the server side -- without a face. Java servlets have made many web applications possible.

There are two kinds of Enterprise Java Beans (EJBs), "Entity Beans" and "Session Beans". Java programmers are already familiar with objects. An entity bean is an object with special properties. Standard Java objects may be permanent, that is, the objects come into existence when they are created in a program. When the program terminates, the object may be lost. But an entity bean may exist until it is deleted. A program may create an entity bean, then the program can be stopped and restarted. The entity bean will continue to exist. After being restarted, the program can again find the entity bean, and continue using the same entity bean. An entity bean may be used by any program on the network.

In practice, entity beans may be backed up by some kind of permanent storage, typically a database. Methods of an entity bean may run on a "server" machine. When an entity bean's method is called, a program's thread stops executing and control passes over to the server. When the method returns from the server, the local thread resumes executing. Entity Beans may have a primary key. The primary key is unique, i.e. each entity bean is uniquely identified by its primary key. For example, an "employee" entity bean may have Social Security numbers as primary keys.

Session beans may be different from entity beans in that they are not permanent objects. They are also not shareable in general, though it may be possible to share them by using their "handles". Session beans can be used to distribute and isolate processing tasks. Each session bean may be used to perform a certain task on behalf of its client. The tasks may be distributed on different machines.

Enterprises focused on web application implementations and deployment may require an environment addressing the management issues of the health, availability, and performance of applications to make them an integral and well-behaved part of the mission-critical IT infrastructure.

Modem, service-oriented enterprises are built upon a complex web of hardware and software components. Web applications built for these enterprises may be layered, interconnected, and often highly distributed. The very architectural nature of web applications may present a serious challenge in isolating and resolving problems that address the management issues of health, availability and performance.

One of the factors considered when monitoring the availability and performance of web applications and underlying application server infrastructure is the use of real-time transaction monitoring versus synthetic transaction monitoring. Synthetic transaction monitoring proactively monitors web applications and allows prevention of error or failure before detection by an end-user. However, synthetic transaction monitoring does not address issues of performance and availability of real-time transactions. In other words, synthetic transaction monitoring does not effectively monitor the real-time condition of a server while executing a given application. Previous efforts to calculate performance thresholds for an Internet web site can be found in US 6339750. Previous efforts to use a Java framework and a systematic approach to support tracking and monitoring software components in component-based programs can be found in Jerry Gao, Eugene Y. Zhu, Simon Shim, Lee Chang, "Monitoring Software Components and Component-Based Software", *Compsac 2000,* p.403, The Twenty-Fourth Annual International Computer Software and Applications Conference, 2000 none of these prior art documents disclose the insertion of dynamic watchers into byte code of the application to be monitored.

Accordingly it would be beneficial to provide a method and system for monitoring computer applications using real-time transaction monitoring.

### SUMMARY

In accordance with the invention there is provided:
a method for monitoring a computer application in accordance with claim 1;
a system for monitoring a computer application in accordance with claim 11; and
a computer readable medium in accordance with claim 22.

A method for monitoring a computer application according to an embodiment of the present disclosure includes selecting the computer application, inputting condition information, monitoring the computer application and generating an alert when a condition of the computer application satisfies predetermined condition information.

A system for monitoring a computer application according to an embodiment of the present disclosure includes an interface device adapted to allow a user to selected a computer application to be monitored and to input condition information and a monitoring device adapted to monitor the selected computer application, wherein the interface device generates an alert when a condition of the selected computer application satisfies predetermined condition information based on a result of the monitoring performed by the monitoring device.

A computer system according to an embodiment of the present disclosure includes a processor and a program storage device readable by the computer system, embodying a program of instructions executable by the processor to perform method steps for monitoring a computer application, the method steps including selecting the computer application, inputting condition information, monitoring the computer application and generating an alert when a condition of the computer application satisfies predetermined condition information.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

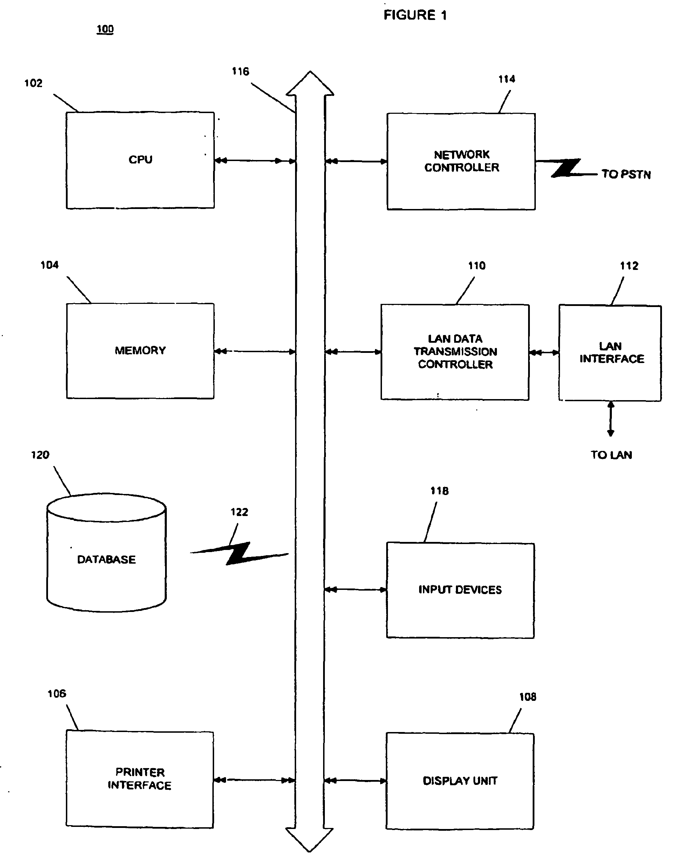

Figure 1 shows an example of a computer system capable of implementing the method and system of the present disclosure;
Figure 2 is a flow chart illustrating a method for monitoring a computer application according to an embodiment of the present disclosure;
Figure 3 is a flow chart illustrating a step of selecting a computer application according to an embodiment of the present disclosure;
Figure 4 is a flow chart illustrating a step of inputting condition information according to an embodiment of the present disclosure;
Figure 5 is a flow chart illustrating a step of monitoring a computer application according to an embodiment of the present disclosure;
Figure 6 is a flow chart illustrating a step of generating an alert according to an embodiment of the present disclosure;
Figure 7 is a block diagram illustrating a system of monitoring a computer application according to an embodiment of the present disclosure;
Figure 8 is a block diagram illustrating a monitoring device according to an embodiment of the present disclosure; and
Figure 9 is an example of an agent and server according to the present disclosure.

### DETAILED DESCRIPTION

Figure I shows an example of a computer system which may implement the method and system of the present disclosure. The system and method of the present disclosure may be implemented in the form of a software application running on a computer system, for example, a mainframe, personal computer (PC), handheld computer, server etc. The software application may be stored on a recording media locally accessible by the computer system, for example, floppy disk, compact disk, hard disk, etc., or may be remote from the computer system and accessible via a hard wired or wireless connection to a network, for example, a local area network, or the Internet.

An example of a computer system capable of implementing the present method and system is shown in Fig. I. The computer system referred to generally as system 100 may include a central processing unit (CPU) 102, memory 104, for example, Random Access Memory (RAM), a printer interlace 106, a display unit 108, a (LAN) local area network data transmission controller 110, a LAN interface 112, a network controller 114, an internal bus 116 and one or more input devices 118, for example, a keyboard, mouse etc. As shown, the system 100 may be connected to a data storage device, for example, a hard disk, 120, via a link 122.

The system and method of the present disclosure invention relate to the area of Information Technology (IT) management. Traditional IT management monitors networks, machines and operating systems, but may not monitor a customer's customized application software. The system and method of the present disclosure complement traditional IT management solutions by providing performance monitoring for EJBs and Servlets that make up the customer's customized application software.

The system and method of the present disclosure provide a management solution with an internal view of the application in order to manage the transactional availability and performance of the application from a synthetic perspective and/or a real time perspective. Since the system and method provide for real-time monitoring of even customized applications, the system and method may detect performance or availability problems of an offending Java Bean home or remote interface, a servlet, or a database connection.

The system and method of the present disclosure provide for monitoring and management of real-time and application specific transactions from a health and performance standpoint. More specifically, the system and method enable monitoring of transactions within the context of a servlet, an EJB or a connection pool.

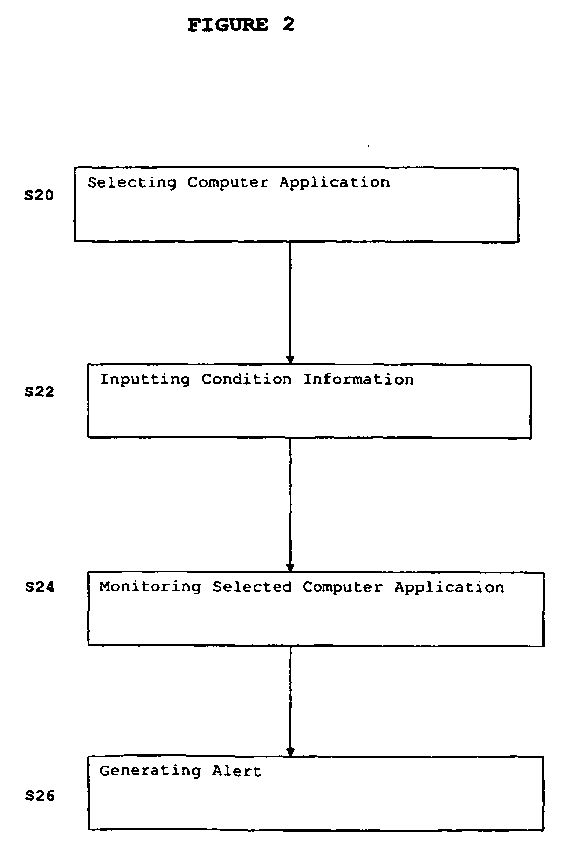

A method for monitoring a computer application according to an embodiment of the present disclosure is illustrated in Figure 2. The method includes selecting the computer application to be monitored, **S20**, inputting condition information, **S22**, monitoring the computer application, **S24** and generating an alert when a condition of the selected computer application satisfies predetermined condition information, **S26.**

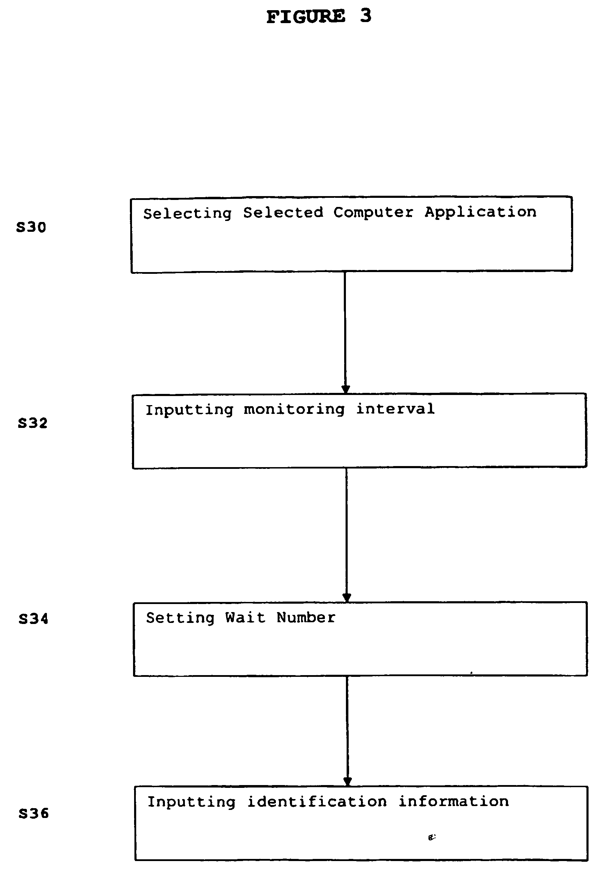

At step **S20,** the application to be monitored is selected by a user. Where the user knows the application that is to be monitored, the user may simply enter the application via an input device, such as a keyboard. The application may be an enterprise java bean or a servlet, for example. Figure 3 illustrates a flow chart of the selecting step according to an embodiment of the present disclosure. At step **S30**, the computer application to be monitored is selected. This may be done via a keyboard as noted above, or the computer application may be selected from a list of computer applications available for monitoring via a user interface, which will be described in more detail below. The computer application may be an enterprise java bean or a servlet. A monitoring interval indicating a period of time that the computer application is to be monitored may be identified in step **S32**. A wait number indicating a number of monitoring intervals during which a status of the application remains in a state prior to generating the alert may be input at step **S34**. That is, the alert may be generated only after the predetermined condition information is satisfied for multiple monitoring intervals, thus, indicating a more persistent problem. Identification information regarding individuals to be alerted by the alert if and when it is generated may be entered at step **S36.** That is, at step **S36** individuals to whom the alert should be sent are identified.

Steps **S30** to **S36** may be implemented via direct input of information via an input device, such as a keyboa rd or mouse, or may be implemented using a graphical user interface. In such an embodiment a list of all servers running computer applications of interest to the user may be displayed to the user. After the user selects a server, a list of all computer applications running on that server may be displayed to the user. The user may then select the desired application without knowing in advance the exact name or location of the application to be monitored. The graphical user interface may also provide prompts to enter monitoring interval, the wait number and the information regarding individuals whom the alert is sent.

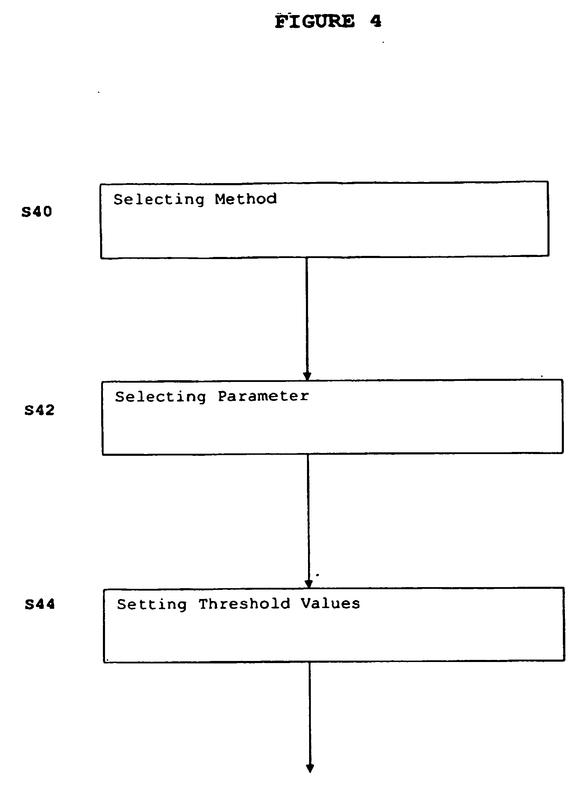

The step of inputting condition information, **S22**, is further described with reference to Figure 4. At step **S40**, the user may select a specific method implemented by the selected computer application to be monitored. It is noted that a computer application may include several methods and each one may be monitored. At step **S42**, the user may select at least one event, or parameter, of a plurality of parameters related to the selected method. These parameters may include an average execution time for the method during the monitoring interval, a maximum execution time for the method during the monitoring interval, a minimum execution time for the method during the monitoring interval, a method invocation count indicating how many times the method was invoked during the monitoring period and a method thread count indicating the number of threads invoking the method during the monitoring interval. The user may select all parameters or may select one or more of these parameters for monitoring.

The user may set threshold values to establish a status of the method or application with regard to each of these parameters in step **S44**. That is, for each selected parameter, the user may set a threshold value or values indicating various states of the application. For example, for the average execution time parameter, the status is normal provided that the average execution time is not above a predetermined first threshold, or a warning level. A warning status results if the average execution time is between the first threshold and a second threshold, a minor level. Major status is designated if the average execution time is between the second threshold and a third threshold, a critical value. The status is designated critical if the average execution time is above the third threshold. Each of the parameters may have different first, second and third threshold values. Thus, a first threshold value for the average execution time event may be different than a first threshold value for the maximum execution time event.

Steps **S40** to **S44** may also be implemented via graphical user interface. The user may choose a selected method to be monitored from a list of several methods performed in the selected computer application. The user may select at least one parameter related to the selected method. The user may then input the first, second and third threshold levels for each selected parameter via the graphical user interface.

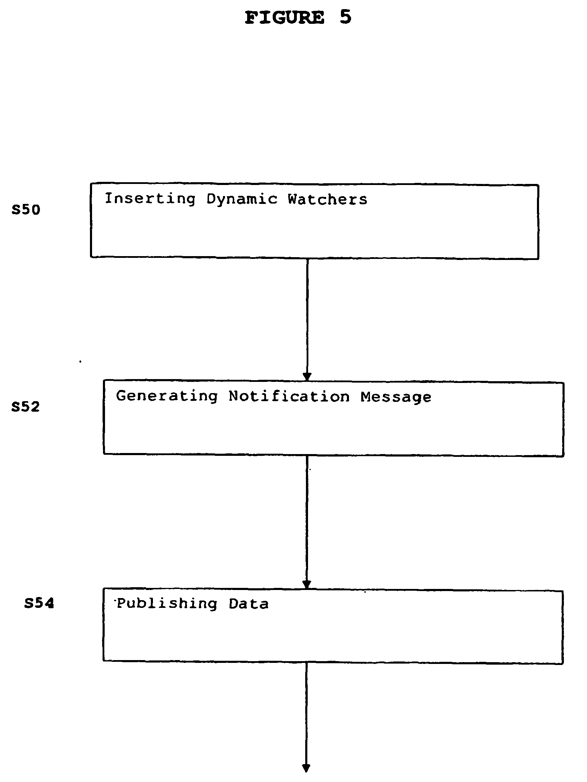

The step of monitoring the computer application is further described with reference to Figure 5. In step **S50**, dynamic watchers are inserted into the byte code of the computer application The dynamic watchers do not alter the application code or affect performance of the application, but merely monitor the application for the occurrence of certain events. At step **S52** a notification message is generated upon occurrence of each of the events. In a preferred embodiment the dynamic watcher generates a notification message when: (1) the application is loaded, (2) the execution of the method begins, (3) the execution of the method ends and (4) the method is accessed by a thread. The notification message may include data indicating a type of the application, such as an enterprise java bean or servlet, a thread ID indicating the thread that invoked the application, the name of the application.and time information indicating the start time or end time of the method. Since the dynamic watchers are inserted in the byte code of the application itself, the notification messages generated by the dynamic watcher provide real-time information on the functioning of the computer application. The real time information is useful in that it illustrates the actual condition of the server on which the application is running.

At step **S54** the data included in the notifications generated by the dynamic watcher may be published. That is, the data may be sent outside of the selected application being monitored to be evaluated to determine whether an alert should be generated in the generating step, **S26.**

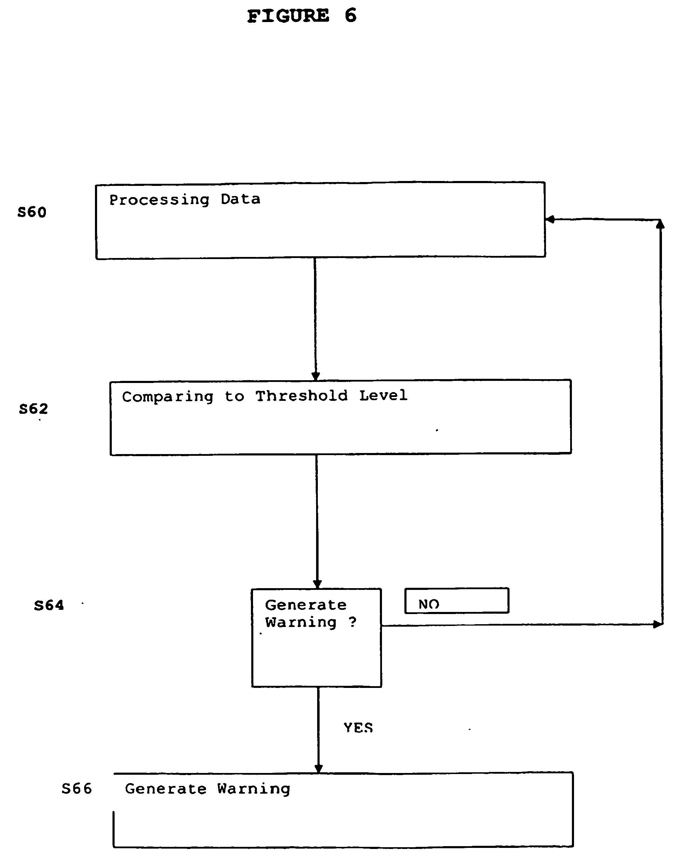

The step of generating an alert, **S26,** is further described with reference to Figure 6. In step **S60**, the data included in the notification messaged generated by the dynamic watcher or watchers is processed to determine a value for the selected parameters. Any parameter selected for monitoring in step **S22** of Figure 2 can be determined using the data included in the notification message, although this may require combining data from more than one notification message. For example, a first notification message may indicate a start time of a method, while another notification message may indicate the end time of the method. The two notification messages together can be used to determine the execution time of the method. In order to determine whether this execution time is a minimum execution time or a maximum execution time, the execution time should be compared to other execution times determined during the monitoring interval.

In step **S62,** the value of each selected parameter is compared to the threshold level or levels associated with each of the selected parameters to provide an indication of the status of the application with respect to the selected parameter. At step **S64** a determination is made as to whether the status or condition of the application satisfies the condition information. More specifically, based on the status of each of the parameters with relation to the threshold levels associated therewith, a determination is made regarding generating the alert. For example, if the average execution time has a status of critical, this likely indicates a problem and an alert should be generated, Yes at **S64**. The alert is then generated at step **S66**. On the other hand where the status of each parameter is nomial, no alert need be generated, No at step **S64**. In this case, no alert need be generated and the process may return to step **S60** to process data included in notification messages from the next monitoring interval, for example. The user may designate the status of the computer application under which the alert is generated.

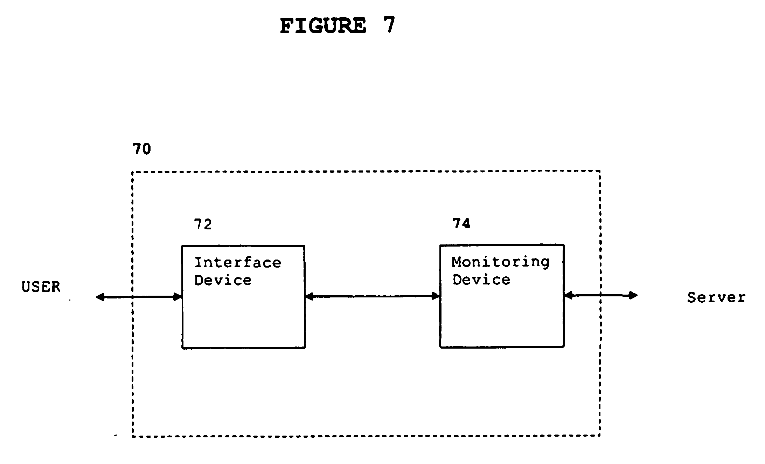

A system **70** for monitoring a computer application according to the present application is described with reference to Figure 7. An interface device **72** is adapted to allow a user to select the computer application to be monitored and to input condition information. A monitoring device **74** is adapted to monitor the computer application. The interface device **72** may also generate an alert when the condition of the computer application matches predetermined condition information.

The interface device **72** may be implemented as a graphical user interface allowing the user to easily input selection and condition information. According to one embodiment of the present application, the interface device **72** allows the user to input selection information to select a server on which a desired computer application is running. The user may then select at least one specific computer application from a plurality of computer applications running on the server to be monitored. The user may also provide a monitoring interval indicating a period of time during which the computer application is monitored and may set a wait number indicating the number of monitoring periods during which the condition of the server satisfies the predetermined condition information prior to generating the alert. As noted above, it may be advantageous to wait prior to generating the alert to ensure that any problem in performance of the application is persistent. The user may also provide identification information indicating individuals to whom the alert is sent when and if the alert is generated.

The condition information input by the user may include information selecting at least one method of a plurality of methods implemented by the selected computer application for monitoring. The user may also select at least one of a plurality of parameters related to the method to be monitored. These parameters include an average execution time for the method during the monitoring interval, a maximum execution time for the method during the monitoring interval, a minimum execution time for the method during the execution time, a method invocation count indicating a number of times the method is invoked during the monitoring interval and a method thread count indicating a number of threads handling a method request during the monitoring interval. The interface device **72** also allows the user to input at least one threshold level for each of the selected parameters for determining a status of the computer application. In a preferred embodiment, several threshold levels are established for each of the parameters. A status may be associated with each of these threshold levels. Normal status may be designated when the parameter is below a first threshold level, referred to as a warning level. A warning status results if the value of the parameter is between the first threshold level and a second threshold, referred to as a minor level. Major status is designated if the value of the parameter is between the second threshold and a third threshold, referred to as a critical value. The status is designated critical if the value of the parameter is above the third threshold. Each of the para meters may have different first, second and third threshold values. Thus, a first threshold value for the average execution time parameter may be different than a first threshold value for the maximum execution time parameter.

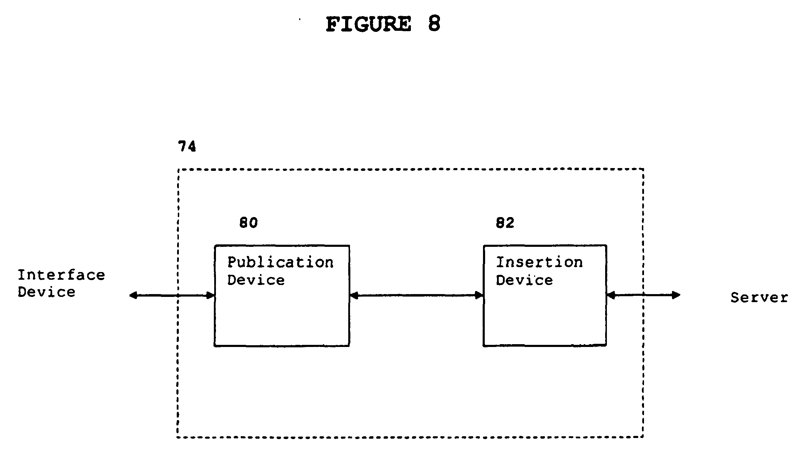

The monitoring device **74** is used to monitor the application. The monitoring device is described in further detail with reference to Figure 8. An insertion device **80** inserts at least one dynamic watcher into the byte code of the selected application. More specifically, the insertion device 80 may insert at least one dynamic watcher into the byte code of the selected method. The dynamic watcher generates notification messages upon the occurrence of certain events in the computer application. More specifically, the dynamic watcher generates a notification message when (1) the computer application is invoked (2) the selected method starts execution (3) the selected method ends execution and (4) the method is accessed by a thread. The notification message may include data indicating a type of the application, such as an enterprise java bean or servlet, a thread ID indicating the thread that-invoked the application, the name of the application and time information indicating the start time or end time of the method.

A publication device **82** is adapted to publish the data included in the notification method. That is the publication device may send data corresponding to the data included in the notification message to the user interface **80**. In a preferred embodiment, publication is accomplished by sending the data to the interface device **80** using User Datagram Protocol. More specifically, a datagram including the data included in the notification message may be sent from the publishing device **82** to the interface device **72** for each notification message generated by the at least one dynamic watcher.

The user interface **72** may then process the data included in the notification message to determine values for each of the selected parameters. This determination may require collection of data from several notification messages. For example, a notification message is generated upon the beginning of execution of selected method and another notification message may be generated upon ending execution of the selected method. Thus, based on these two notification messages the execution time may be determined. In addition, in order to determine an average execution time it is necessary to average the execution time of all invocations of the selected method during the monitoring interval. The value of each selected parameter may then be compared to the threshold level or levels associated with each selected parameter in order to determine a status of the computer application. Based on the status, the interface device 70 may generate the alert. The alert may then be sent to an individuals identified via the interface device. For example, if a value of the average execution time is above the third threshold level, the status of the computer application is critical. This may indicate a serious problem in the execution of the computer application and the alert is generated. However, where the value of each of the selected parameters below the first threshold level for each parameter, the computer application is functioning normally and the alert need not be generated. The user may designate the status for each parameter under which the alert is to be generated.

It is noted that the system for monitoring a computer application substantially implements the method for monitoring a computer application discussed above.

In a specific embodiment of the present application, the system for monitoring a computer application may be implemented as a plug-in into the Application Server of and interface with the Unicenter Management for J2EE Agent, for example. In a preferred embodiment, a user interface allows the user to monitor the performance of selected applications, such as EJB's and servlets deployed within the application server. More specifically, the user interface may employ a form which may contain a single object representing a Weblogic Insider Expert Agent, or Agent. The form shows the Weblogic deployed servlet or EJB, that is, the selected application that the Expert Agent is monitoring. Servlets or EJBs to be monitored may be added, modified and removed. Only the servlets and EJBs deployed within the Weblogic servers being monitored by the same Agent may be allowed.

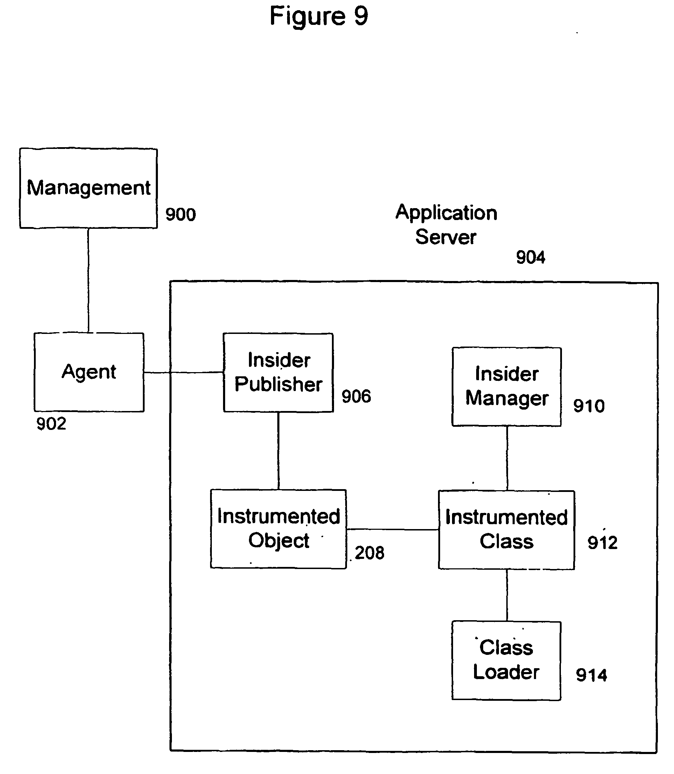

Figure 9 shows an example of an Agent and server according to the present disclosure. A Management block 900, such as Unicenter Management for Weblogic, WebSphere or Oracle9iAS, is shown connected to an Agent 902, which connects with an Insider Publisher 906 within an Application Server 904. Insider Publisher 906 connects with an Instrumented Object. 908, which connects with an Instrumented Class 912 which connects with both and Insider Manager 910 and a Class Loader 914.

Insider, that is the Insider Manager and the Insider Publisher together, work as an instrumentation agent for Agent. It may run in Application Server's Java Virtual Machine (JVM) which is where all EJB and servlets are run. Agent may communicate with Insider using User Datagram Protocol (UDP) publish/subscribe model. Insider architecture may be divided into two parts, byte code instrumentation and publishing instrumentation to publish data to Agent.

As a class, or application, gets loaded in the JVM, Insider may intercept it and inserts dynamic watchers into these class files. As EJBs, JSPs/Servlets and stand alone java classes get loaded in the JVM, Insider may instrument the byte code by inserting dynamic probes or watchers.

Insider may publish data to Agent by two methods. The first method is a UDP Publish/Subscribe method, where Insider opens a UDP Socket on the application server. For every notification message received from byte code instrumentation it may send out a datagram packet. The second method is a CASM EJB method where CASM EJB acts as a request response service. Agent uses this service to get the metadata of the instrumented objects, or monitored applications. This service may also dynamically start and stop publishing of data.

The present system and method thus provides an efficient and convenient way for an administrator to configure and modify one or more computer systems.

The present disclosure may be conveniently implemented using one or more conventional general purpose digital computers and/or servers programmed according to the teachings of the present specification. Appropriate software coding can readily be prepared by skilled programmers based on the teachings of the present disclosure. The present disclosure may also be implemented by the preparation of application specific integrated circuits or by interconnecting an appropriate network of conventional components.

## Claims

1. A method for monitoring a computer application comprising:
selecting (S20) the computer application to be monitored;
inputting (S22) condition information;
inserting (S50) at least one dynamic watcher into byte code of the computer application to monitor the computer application;
generating (S52) by the dynamic watcher a notification message upon detection of any one of a plurality of events in the computer application;
processing (S60) the data included in the notification message to determine a value for at least one selected parameter specified by the condition information;
comparing (S62) the value of each of the selected parameters to at least one threshold level associated with the corresponding selected parameter;
determining (S64) a status of the computer application based on the comparison; and
generating (S26) an alert when the status of the computer application satisfies the condition information.

2. The method of claim 1, wherein the computer application is selected based on selection information input by a user via a user interface (72).

3. The method of claim 1, wherein the computer application is one of an enterprise java bean and a servlet.

4. The method of claim 1 wherein the selecting step further comprises:
selecting a server (904) on which the computer application operates;
selecting (S30) at least one computer application from a plurality of computer applications running on the selected server (904) to be monitored;
inputting (S32) a monitoring interval indicating a period of time during which the computer application is monitored; and
inputting (S34) a wait number indicating a number of monitoring intervals during which the condition of the computer application satisfies the condition information prior to generating the alert.

5. The method of claim 1, further comprising:
selecting (S40) at least one method of a plurality of methods performed by the selected computer application to be monitored.

6. The method of claim 5, further comprising:
selecting (S42) at least one parameter of a plurality of parameters related to the selected method to be monitored, wherein the plurality of parameters includes an average execution time of the method during the monitoring interval, a minimum execution time of the method during the monitoring interval, a maximum execution time of the method during the monitoring interval, a method invocation count indicating a number of times the method is invoked during the monitoring interval and a method thread count indicating a number of threads handling a method request during the monitoring interval.

7. The method of claim 6, further comprising:
inputting (544) at least one threshold level for determining a status of the at least one selected parameter.

8. The method of claim 1, wherein the plurality of events includes loading the computer application, starting a selected method of the computer application, ending the selected method of the computer application, and accessing the selected method via a thread.

9. The method of claim 1, wherein the notification message generated by the dynamic watcher includes data indicating a type of the computer application, a thread ID indicating an identity of a thread that invoked the computer application, a name indicating a name of the computer application invoked, and time information including one of a start time and an end time of a selected method of the computer application.

10. The method of claim 1, further comprising:
publishing (S54) the data included in the notification message generated by the dynamic watcher.

11. A system (70) for monitoring a computer application comprising:
an interface device (72) adapted to allow a user to select a computer application to be monitored and to input condition information; and
a monitoring device (74) adapted to monitor the selected computer application, wherein the monitoring device includes an insertion device (80) adapted to insert one or more dynamic watchers into the byte code of the selected computer application, wherein the dynamic watchers generate a notification message upon occurrence of each of a plurality of events in the computer application;
and wherein the interface device (72) is operable to process the data corresponding to each notification message to determine a value for at least one selected parameter specified by the condition information and to compare the value of each selected parameter to a threshold value associated with the selected parameter to determine a status of the computer application, the interface device (72) being further operable to generate an alert when the status of the computer application satisfies the condition information.

12. The system (70) of claim 11, wherein the interface device (72) comprises a graphical user interface (72) for allowing a user to input information.

13. The system (70) of claim 11, wherein the interface device (72) is operable to allow the user to select a server (904) running a plurality of computer applications and to select at least one computer application from the plurality of computer applications running on the selected server (904) to be monitored and to input a monitoring interval indicating a period of time during which the selected computer application is to be monitored.

14. The system (70) of claim 11, wherein the interface device (72) is operable to allow the user to input a wait number indicating a number of monitoring intervals during which the status of the computer application satisfies the condition information prior to generating the alert.

15. The system (70) of claim 11, wherein the condition information comprises method information indicating at least one method of a plurality of methods used by the selected computer application to be monitored, parameter information indicating at least one parameter of a plurality of parameters related to the selected method to be monitored and threshold information indicating at least one threshold level for the at least one selected parameter for determining the status of the computer application.

16. The system (70) of claim 15, wherein the plurality of parameters includes an average execution time of the method during the monitoring interval, a minimum execution time of the method during the monitoring interval, a maximum execution time of the method during the monitoring interval, a method invocation count indicating a number of times the method is invoked during the monitoring interval and a method thread count indicating a number of threads handling a method request during the monitoring interval.

17. The system (70) of claim 11, wherein the monitoring device (74) further comprises:
a publication device (82) adapted to publish data included in the notification messages to the interface device (72).

18. The system (70) of claim 11, wherein the plurality of events comprise loading of the computer application, beginning execution of a selected method of the computer application, ending execution of the selected method, and accessing of the computer application by a thread

19. The system (70) of claim 11, wherein the notification message comprises data indicating a type of the selected computer application, a thread ID indicating an identity of a thread that invoked the computer application, a name indicating a name of the selected computer application invoked, and time information including one of a start time and an end time of a selected method of the computer application.

20. The system (70) of claim 17, wherein the publication device (82) is operable to send data corresponding to each notification message generated by the at least one dynamic watcher to the interface device (72).

21. The system (70) of claim 11, wherein the interface device (72) is operable to generate the alert when the status of the computer application is a predetermined status.

22. A computer readable medium comprising instructions which, when executed by a suitable computer, cause the computer to perform a method according to any one of claims 1 to 10.

## Patentansprüche

1. Verfahren zum Überwachen einer Computeranwendung, umfassend:
Auswählen (S20) der zu überwachenden Computeranwendung;
Eingeben (S22) von Zustandsinformation;
Einfügen (S50) mindestens eines dynamischen Wächters in den Bytecode der Computeranwendung, um die Computeranwendung zu überwachen;
Erzeugen (S52) durch den dynamischen Wächter einer Benachrichtigung bei Erkennung eines beliebigen von mehreren Ereignissen in der Computeranwendung;
Verarbeiten (S60) der Daten, die in der Benachrichtigung enthalten sind, um einen Wert für mindestens einen ausgewählten Parameter zu bestimmen, der von der Zustandsinformation spezifiziert wird;
Vergleichen (S62) des Werts jedes der ausgewählten Parameter mit mindestens einem Schwellenwert, der dem entsprechenden ausgewählten Parameter zugeordnet ist;
Bestimmen (S64) eines Status der Computeranwendung auf der Grundlage des Vergleichs; und
Erzeugen (S26) eines Alarms, wenn der Status der Computeranwendung die Zustandsinformation erfüllt.

2. Verfahren nach Anspruch 1, wobei die Computeranwendung auf der Grundlage von Auswahlinformation, die von einem Benutzer über eine Benutzerschnittstelle (72) eingegeben wird, ausgewählt wird.

3. Verfahren nach Anspruch 1, wobei die Computerwendung ein Enterprise JavaBean oder ein Servlet ist.

4. Verfahren nach Anspruch 1, wobei der Schritt des Auswählens Folgendes umfasst:
Auswählen eines Servers (904), auf dem die Computeranwendung betrieben wird;
Auswählen (S30) mindestens einer Computeranwendung aus mehreren Computeranwendungen, die auf dem ausgewählten zu überwachenden Server (904) laufen;
Eingeben (S32) eines Überwachungsintervalls, das einen Zeitraum angibt, während dessen die Computeranwendung überwacht wird; und
Eingeben (S34) einer Wartezahl, die eine Anzahl von Überwachungsintervallen angibt, während derer der Zustand der Computeranwendung die Zustandsinformation vor dem Erzeugen des Alarms erfüllt.

5. Verfahren nach Anspruch 1, ferner umfassend:
Auswählen (S40) mindestens eines Verfahrens von mehreren Verfahren, die von der ausgewählten zu überwachenden Computeranwendung ausgeführt werden.

6. Verfahren nach Anspruch 5, ferner umfassend:
Auswählen (S42) mindestens eines Parameters von mehreren Parametern, die mit dem ausgewählten zu überwachenden Verfahren in Beziehung stehen, wobei die mehreren Parameter eine durchschnittliche Ausführungszeit des Verfahrens während des Überwachungsintervalls, eine minimale Ausführungszeit des Verfahrens während des Überwachungsintervalls, eine maximale Ausführungszeit des Verfahrens während des Überwachungsintervalls, eine Verfahrensaufrufzählung, die eine Anzahl von Malen anzeigt, die das Verfahren während des Überwachungsintervalls aufgerufen wird, und eine Verfahrensfadenzählung, die eine Anzahl von Threads anzeigt, die eine Verfahrensanforderung während des Überwachungsintervalls handhaben, aufweisen.

7. Verfahren nach Anspruch 6, ferner umfassend:
Eingeben (S44) mindestens eines Schwellenwerts zum Bestimmen eines Status des mindestens einen ausgewählten Parameters.

8. Verfahren nach Anspruch 1, wobei die mehreren Ereignisse das Laden der Computeranwendung, Starten eines ausgewählten Verfahrens der Computeranwendung, Beenden des ausgewählten Verfahrens der Computeranwendung und Zugreifen auf das ausgewählte Verfahren über einen Thread aufweisen.

9. Verfahren nach Anspruch 1, wobei die Benachrichtigung, die von dem dynamischen Wächter erzeugt wird, Daten aufweist, die eine Art der Computeranwendung, eine Thread-ID, die eine Identität eines Threads angibt, der die Computeranwendung aufgerufen hat, einen Namen, der einen Namen der aufgerufenen Computeranwendung angibt, und eine Zeitinformation, die eine Startzeit und eine Endzeit eines ausgewählten Verfahrens der Computeranwendung aufweist, angeben.

10. Verfahren nach Anspruch 1, ferner umfassend
Bekanntgeben (S54) der Daten, die in der Benachrichtigung enthalten sind, die von dem dynamischen Wächter erzeugt wird.

11. System (70) zum Überwachen einer Computeranwendung, umfassend:
eine Schnittstellenvorrichtung (72), die geeignet ist, um einem Benutzer das Auswählen einer zu überwachenden Computeranwendung und das Eingeben von Zustandsinformation zu ermöglichen; und
eine Überwachungsvorrichtung (74), die geeignet ist, um die ausgewählte Computeranwendung auszuwählen, wobei die Überwachungsvorrichtung eine Einfügungsvorrichtung (80) aufweist, die geeignet ist, um einen oder mehrere dynamische Wächter in den Bytecode der ausgewählten Computeranwendung einzufügen, wobei die dynamischen Wächter bei Eintreten jedes der mehreren Ereignisse in der Computeranwendung eine Benachrichtigung erzeugen;
und wobei die Schnittstellenvorrichtung (72) betriebsbereit ist, um die Daten, die jeder Benachrichtigung entsprechen, zu verarbeiten, um einen Wert für mindestens einen ausgewählten Parameter, der von der Zustandsinformation spezifiziert wird, zu bestimmen und den Wert jedes ausgewählten Parameters mit einem Schwellenwert zu vergleichen, der dem ausgewählten Parameter zugeordnet ist, um einen Status der Computeranwendung zu bestimmen, wobei die Schnittstellenvorrichtung (72) ferner betriebsbereit ist, um einen Alarm zu erzeugen, wenn der Status der Computeranwendung die Zustandsinformation erfüllt.

12. System (70) nach Anspruch 11, wobei die Schnittstellenvorrichtung (72) eine grafische Benutzerschnittstelle (72) umfasst, um einem Benutzer das Eingeben von Information zu ermöglichen.

13. System (70) nach Anspruch 11, wobei die Schnittstellenvorrichtung (72) betriebsbereit ist, um dem Benutzer das Auswählen eines Servers (904) zu ermöglichen, der mehrere Computeranwendungen betreibt, und mindestens eine Computeranwendung aus den mehreren Computeranwendungen, die auf dem ausgewählten zu überwachenden Server (904) laufen, auszuwählen und ein Überwachungsintervall einzugeben, das einen Zeitraum angibt, während dessen die ausgewählte Computeranwendung zu überwachen ist.

14. System (70) nach Anspruch 11, wobei die Schnittstellenvorrichtung (72) betriebsbereit ist, um dem Benutzer das Eingeben einer Wartezahl, die eine Anzahl von Überwachungsintervallen angibt, während derer der Status der Computeranwendung die Zustandsinformation erfüllt, vor dem Erzeugen des Alarms zu ermöglichen.

15. System (70) nach Anspruch 11, wobei die Zustandsinformation Verfahrensinformation umfasst, die mindestens ein Verfahren von mehreren Verfahren, die von der ausgewählten zu überwachenden Computeranwendung benutzt werden, Parameterinformation, die mindestens einen Parameter von mehreren Parametern angibt, die mit dem ausgewählten zu überwachenden Verfahren in Beziehung stehen, und Schwellenwertinformation, die mindestens einen Schwellenwert für den mindestens einen ausgewählten Parameter zum Bestimmen des Status der Computeranwendung angibt, anzeigt.

16. System (70) nach Anspruch 15, wobei die mehreren Parameter eine durchschnittliche Ausführungszeit des Verfahrens während des Überwachungsintervalls, eine minimale Ausführungszeit des Verfahrens während des Überwachungsintervalls, eine maximale Ausführungszeit des Verfahrens während des Überwachungsintervalls, eine Verfahrensaufrufzählung, die eine Anzahl von Malen anzeigt, die das Verfahren während des Überwachungsintervalls aufgerufen wird, und eine Verfahrensfadenzählung, die eine Anzahl von Threads anzeigt, die eine Verfahrensanforderung während des Überwachungsintervalls handhaben, aufweisen.

17. System (70) nach Anspruch 11, wobei die Überwachungsvorrichtung (74) ferner Folgendes umfasst:
eine Veröffentlichungsvorrichtung (82), die geeignet ist, um Daten, die in der Benachrichtigung enthalten sind, der Schnittstellenvorrichtung (72) bekannt zu geben.

18. System (70) nach Anspruch 11, wobei die mehreren Ereignisse das Laden der Computeranwendung, Beginnen der Ausführung eines ausgewählten Verfahrens der Computeranwendung, Beenden der Ausführung des ausgewählten Verfahrens und Zugreifen auf die Computeranwendung durch einen Thread umfassen.

19. System (70) nach Anspruch 11, wobei die Benachrichtigung Daten umfasst, die eine Art der ausgewählten Computeranwendung, eine Thread-ID, die eine Identität eines Threads angibt, der die Computeranwendung aufgerufen hat, einen Namen, der einen Namen der aufgerufenen ausgewählten Computeranwendung angibt, und Zeitinformation, die eine Startzeit und eine Endzeit eines ausgewählten Verfahrens der Computeranwendung aufweist, angeben.

20. System (70) nach Anspruch 17, wobei die Veröffentlichungsvorrichtung (82) betriebsbereit ist, um Daten, die jeder Benachrichtigung entsprechen, die von dem mindestens einen dynamischen Wächter erzeugt wird, an die Schnittstellenvorrichtung (72) zu senden.

21. System (70) nach Anspruch 11, wobei die Schnittstellenvorrichtung (72) betriebsbereit ist, um den Alarm zu erzeugen, wenn der Status der Computeranwendung ein vorbestimmter Status ist.

22. Computerlesbares Medium, umfassend Befehle, die bei Ausführung von einem geeigneten Computer bewirken, dass der Computer ein Verfahren nach einem der Ansprüche 1 bis 10 ausführt.

## Revendications

1. Procédé de surveillance d'une application informatique comprenant :
la sélection (S20) de l'application informatique à surveiller ;
l'introduction (S22) de conditions ;
l'insertion (S50) d'au moins un surveillant dynamique dans un pseudo-code binaire de l'application informatique pour surveiller l'application informatique ;
la production (S52), par le surveillant dynamique, d'un message de notification lors de la détection d'un événement parmi plusieurs événements de l'application informatique ;
le traitement (S60) des données comprises dans le message de notification pour déterminer une valeur pour au moins un paramètre sélectionné spécifié par les conditions ;
la comparaison (S62) de la valeur de chacun des paramètres sélectionnés à au moins un niveau de seuil associé au paramètre sélectionné correspondant ;
la détermination (S64) d'un statut de l'application informatique sur base de la comparaison ; et
la production (S26) d'une alerte lorsque le statut de l'application informatique satisfait aux conditions.

2. Procédé selon la revendication 1, dans lequel l'application informatique est choisie en se basant sur des informations de sélection introduites par un utilisateur via une interface d'utilisateur (72).

3. Procédé selon la revendication 1, dans lequel l'application informatique est un élément parmi un composant Enterprise JavaBeans et un servlet Java.

4. Procédé selon la revendication 1, dans lequel l'étape de sélection comprend en outre :
la sélection d'un serveur (904) sur lequel l'application informatique fonctionne ;
la sélection (S30) d'au moins une application informatique parmi plusieurs applications informatiques exécutées sur le serveur sélectionné (904) à surveiller ; l'introduction (S32) d'un intervalle de surveillance indiquant une période de temps au cours de laquelle l'application informatique est surveillée ; et
l'introduction (S34) d'un nombre d'attente indiquant un nombre d'intervalles de surveillance au cours desquels la condition de l'application informatique satisfait aux conditions avant la production de l'alerte.

5. Procédé selon la revendication 1, comprenant en outre :
la sélection (S40) d'au moins un procédé parmi plusieurs procédés réalisés par l'application informatique sélectionnée à surveiller.

6. Procédé selon la revendication 5, comprenant en outre :
la sélection (S42) d'au moins un paramètre parmi plusieurs paramètres liés au procédé sélectionné à surveiller, dans lequel les paramètres comprennent un temps d'exécution moyen du procédé sur l'intervalle de surveillance, un temps d'exécution minimum du procédé sur l'intervalle de surveillance, un temps d'exécution maximum du procédé sur l'intervalle de surveillance, un compte de déclenchement du procédé indiquant le nombre de fois que le procédé est déclenché dans l'intervalle de surveillance et un compte de tâches du procédé indiquant le nombre de tâches manipulant une requête du procédé sur l'intervalle de surveillance.

7. Procédé selon la revendication 6, comprenant en outre :
l'introduction (S44) d'au moins un niveau de seuil pour déterminer un statut du paramètre sélectionné.

8. Procédé selon la revendication 1, dans lequel la pluralité d'événements comprend le chargement de l'application informatique, le démarrage d'un procédé sélectionné de l'application informatique, l'interruption du procédé sélectionné de l'application informatique et l'accès au procédé sélectionné via une tâche.

9. Procédé selon la revendication 1, dans lequel le message de notification produit par le surveillant dynamique comprend des données indiquant un type de l'application informatique, une identification de tâche indiquant une identité d'une tâche qui a déclenché l'application informatique, un nom indiquant un nom de l'application informatique déclenchée, et les informations de temps comprenant un temps parmi le temps de début et le temps de fin d'un procédé sélectionné de l'application informatique.

10. Procédé selon la revendication 1, comprenant en outre :
la publication (S54) des données comprises dans le message de notification produit par le surveillant dynamique.

11. Système (70) pour surveiller une application informatique comprenant :
un dispositif d'interface (72) adapté pour permettre à un utilisateur de sélectionner une application informatique à surveiller et pour introduire des conditions ; et
un dispositif de surveillance (74) adapté pour surveiller l'application informatique sélectionnée, dans lequel le dispositif de surveillance comprend un dispositif d'insertion (80) adapté de manière à insérer un ou plusieurs surveillants dynamiques dans le pseudo-code binaire de l'application informatique sélectionnée, dans lequel les surveillants dynamiques produisent un message de notification lors de l'apparition de chaque événement parmi plusieurs événements dans l'application informatique ;
et dans lequel le dispositif d'interface (72) est utilisable pour traiter les données correspondantes à chaque message de notification pour déterminer une valeur pour au moins un paramètre sélectionné spécifié par les conditions et pour comparer la valeur de chaque paramètre sélectionné à une valeur de seuil associée au paramètre sélectionné afin de déterminer un statut de l'application informatique, le dispositif d'interface (72) étant en outre utilisable pour produire une alerte lorsque le statut de l'application informatique satisfait aux conditions.

12. Système (70) selon la revendication 11, dans lequel le dispositif d'interface (72) comprend une interface utilisateur graphique (72) pour permettre à un utilisateur d'introduire des informations.

13. Système (70) selon la revendication 11, dans lequel le dispositif d'interface (72) est utilisable pour permettre à l'utilisateur de sélectionner un serveur (904) exécutant plusieurs applications informatiques et pour sélectionner au moins une application informatique parmi les applications informatiques exécutées sur le serveur sélectionné (904) à surveiller et pour introduire un intervalle de surveillance indiquant une période de temps au cours de laquelle l'application informatique sélectionnée doit être surveillée.

14. Système (70) selon la revendication 11, dans lequel le dispositif d'interface (72) est utilisable pour permettre à l'utilisateur d'introduire un nombre d'attente indiquant un nombre d'intervalles de surveillance au cours desquels le statut de l'application informatique satisfait aux conditions avant la production de l'alerte.

15. Système (70) selon la revendication 11, dans lequel les conditions comprennent des informations du procédé indiquant au moins un procédé parmi plusieurs procédés utilisés par l'application informatique sélectionnée à surveiller, des informations de paramètres indiquant au moins un paramètre parmi plusieurs paramètres liés au procédé sélectionné à surveiller et des informations de seuil indiquant au moins un niveau de seuil pour le paramètre sélectionné pour déterminer le statut de l'application informatique.

16. Système (70) selon la revendication 15, dans lequel les paramètres comprennent un temps d'exécution moyen du procédé sur l'intervalle de surveillance, un temps d'exécution minimum du procédé sur l'intervalle de surveillance, un temps d'exécution maximal du procédé sur l'intervalle de surveillance, un compte de déclenchement du procédé indiquant le nombre de fois que procédé est déclenché sur l'intervalle de surveillance et un compte de tâches du procédé indiquant le nombre de tâches manipulant une demande du procédé sur l'intervalle de surveillance.

17. Système (70) selon la revendication 11, dans lequel le dispositif de surveillance (74) comprend en outre :
un dispositif de publication (82) adapté pour publier des données comprises dans les messages de notification au dispositif d'interface (72).

18. Système (70) selon la revendication 11, dans lequel les événements comprennent le chargement de l'application informatique, le début d'exécution d'un procédé sélectionné de l'application informatique, l'interruption de l'exécution du procédé sélectionné, et l'accès à l'application informatique par une tâche.

19. Système (70) selon la revendication 11, dans lequel le message de notification comprend des données indiquant un type de l'application informatique sélectionnée, une identification de tâche indiquant une identité d'une tâche qui déclenche l'application informatique, un nom indiquant un nom de l'application informatique sélectionnée, et les informations de temps comprenant un temps parmi un temps de début et un temps de fin d'un procédé sélectionné de l'application informatique.

20. Système (70) selon la revendication 17, dans lequel le dispositif de publication (82) est utilisable pour envoyer des données correspondant à chaque message de notification produit par le surveillant dynamique au dispositif d'interface (72).

21. Système (70) selon la revendication 11, dans lequel le dispositif d'interface (72) est utilisable pour produire l'alerte lorsque le statut de l'application informatique est un statut prédéterminé.

22. Milieu assimilable par un ordinateur comprenant des instructions qui, lorsqu'elles exécutées par un ordinateur approprié, entraînent l'ordinateur à réaliser un procédé selon l'une quelconque des revendications 1 à 10.
